# EUROPEAN PATENT APPLICATION

(11) **EP 4 679 415 A1**
(43) Date of publication of application: **14.01.2026**
(21) Application number: 25188182.7
(22) Date of filing: 08.07.2025
(51) Int. Cl.: G10K 15/02

(54) **ARRANGEMENT OF AN ELECTRONIC BOARD FOR A MOTOR VEHICLE AXLE WITH AN ACCELEROMETER GENERATING A CHARACTERISTIC SIGNAL FOR THE PRODUCTION OF SOUND**

(30) Priority: 08.07.2024 IT 202400015718
(71) Applicant: FERRARI S.p.A., 41100 Modena (IT)
(72) Inventor: VITIELLO, Pasquale, 41100 MODENA (IT); CATALDI, Matteo, 41100 MODENA (IT); OLIVA, Alfonso, 41100 MODENA (IT); POGGIO, Luca, 41100 MODENA (IT); TANZI, Alessandro, 41100 MODENA (IT); BOTTI, Tommaso, 41100 MODENA (IT); ROCCHI, Nicholas, 41100 MODENA (IT); SPREAFICO, Fabio, 41100 MODENA (IT); RONCARATI, Giacomo, 41100 MODENA (IT)
(74) Representative: Studio Torta S.p.A.

(57) **Abstract**

An axle (11) for a motor vehicle (1) includes an electric motor (3) having an outer casing (13), an electrical grid (15) configured to power the motor (3) and comprising an inverter (40) in turn comprising a box (41) internally defining a housing (42) and attached to the outer casing (13), an electronic board (21) comprising a transducer (17) configured to detect a quantity indicative of a vibration of the axle (11) and to generate a corresponding signal, characterized in that the electronic board (21) is attached to the box (41).

## Description

### CROSS-REFERENCE TO RELATED APPLICATIONS

This patent application claims priority from Italian patent application no. 102024000015718 filed on July 8, 2024, the entire disclosure of which is incorporated herein by reference.

### FIELD OF THE ART

The invention concerns an axle for a motor vehicle provided with electronic board and more in particular an electronic board with a transducer for generating a characteristic signal usable for the reproduction of vibrations or sound via a relative emission apparatus configured to produce sound or vibrations on the basis of the characteristic signal.

### PRIOR ART

As is known, some motor vehicles are fitted with electric propulsion devices, i.e. devices that include at least one electric motor to drive the relative motor vehicle.

During its operation, the electric motor emits sounds or vibrations that may be unpleasant and/or not in line with the driving experience expected by the driver.

This introduces a problem of awareness in the driver with respect to the operating conditions of the electric motor and more generally with respect to the performance of the motor vehicle comprising the electric motor.

In practice, from the driver's point of view, the sound and/or vibrational performance of the motor vehicles mentioned above are not satisfactory.

Therefore, there is a need to improve the sound and/or vibrational performance of the motor vehicles or to increase the awareness in the driver concerning the operation of the motor.

In addition, some drivers are notoriously interested in perceiving sounds or vibrations associated with the operation of the motor vehicle for reasons of driving pleasure.

Therefore, the need to increase the driver's driving pleasure is also felt.

For this reason, some solutions are known in which an emission apparatus produces a sound associated with a characteristic signal indicative of a behaviour of the electric motor or more generally of an axle including the electric motor.

For example, the characteristic signal may be relative to a vibration or acceleration of the electric motor during its operation.

Here, the need is felt to improve the fidelity of the characteristic signal with respect to the actual behaviour of the electric motor in operation. In fact, the transducers and the relative integration archetype on the measurand known to generate the characteristic signal produce significant noise in the characteristic signal, as well as its generally unsatisfactory bandwidth, with particular reference to the higher frequencies.

The fidelity of the characteristic signal directly influences the veracity and richness of the sound reproduced by the emission apparatus, so that the satisfaction of the latter requirement also entails a satisfaction of the other needs mentioned above.

The problem of the characteristic signal fidelity may generally also concern many other types of vehicular application, wherein a method or algorithm uses as an input signal the characteristic signal of a transducer adapted to detect a vibration or acceleration of any component or structure of the motor vehicle, such as for example the axle (even if not necessarily electric, i.e. also not necessarily including the electric motor), a chassis portion, an element of the suspensions, a body element, a traction wheel, etc.

Examples of these other types of vehicular application can be in particular road noise cancellation apparatuses, which notoriously apply algorithms based on an input reference signal indicative of a vibration of a point of the suspended mass of the motor vehicle, or apparatuses for monitoring the occurrence of anomalies of machines of the motor vehicle, where the presence of an anomaly is detected by an input signal indicative of a vibration of a component of the monitored machine, or systems for controlling the stability of the motor vehicle, where input signals indicative of vibrations of the wheels, the chassis, or parts of the suspension, can be used as information to control the dynamics of the motor vehicle.

In all these types of applications, it is very important that the input signal reproduces as faithfully as possible, that is, with the utmost consistency and precision, the vibration or vibrational response that must be indicated by the input signal itself.

Therefore, the need is generally felt to increase the fidelity of the signals generated by relative transducers and indicative of a vibration or acceleration or vibrational response of a component of the motor vehicle.

An aim of the invention is to meet at least one of the needs set forth above, preferably in a simple, reliable, and repeatable manner.

### DISCLOSURE OF THE INVENTION

The aim is achieved by an axle for a motor vehicle as defined in claim 1.

The dependent claims set out particular embodiments of the invention.

### BRIEF DESCRIPTION OF THE DRAWINGS

In the following, an embodiment of the invention is described for a better understanding thereof by way of nonlimiting example and with reference to the accompanying drawings in which:
- Figure 1 is a schematic side view of a motor vehicle according to the invention,
- Figure 2 is a diagram of a portion of the motor vehicle of Figure 1,
- Figure 3 is a perspective view, on an enlarged scale, of an axle of the motor vehicle,
- Figure 4 is an exploded view of a portion of an inverter of the axle of Figure 3, and

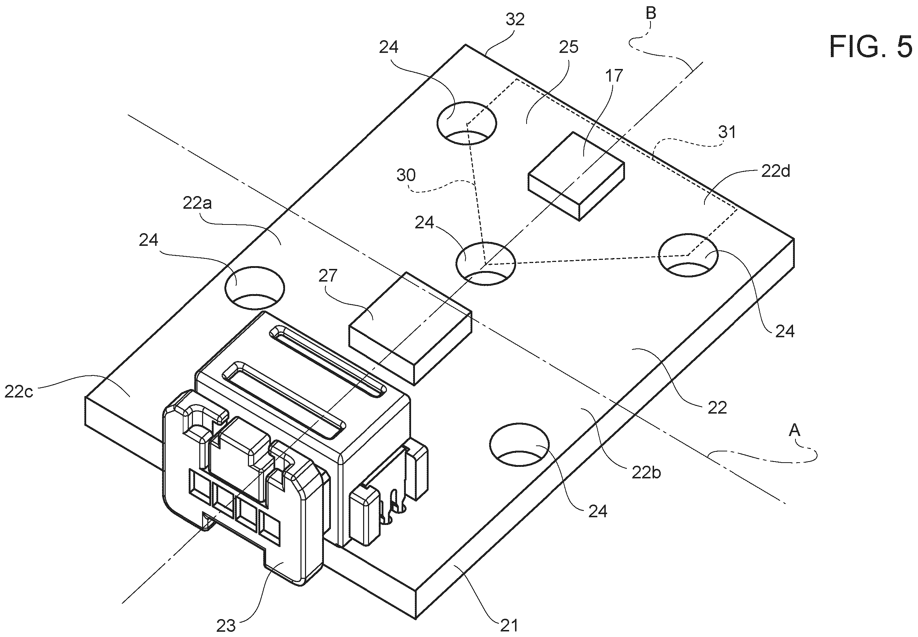

- Figure 5 is a perspective view, on an enlarged scale, of an electronic board contained within the inverter of Figure 4.

### EMBODIMENTS OF THE INVENTION

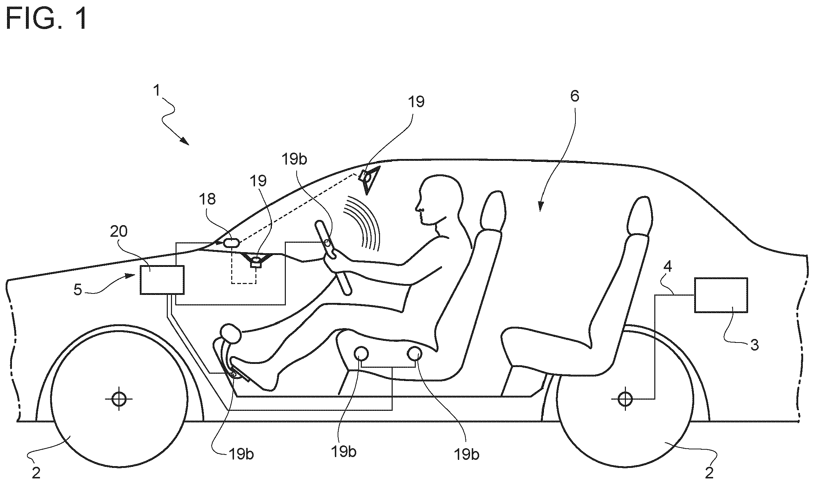

In Figure 1, reference numeral 1 is used to denote, as a whole, a motor vehicle.

The motor vehicle 1 comprises a plurality of wheels 2, a motor or propeller 3, for example an electric motor, and a transmission group 4 configured to connect the motor 3 to the wheels 2, so that the motor 3 can deliver power to the wheels 2 via the transmission group 4.

Furthermore, the motor vehicle 1 comprises a suspended body 5 with respect to the wheels 2 by means of suspensions of known type and not shown.

The body 5 defines a passenger compartment 6 of the motor vehicle 1 for accommodating at least one driver and optionally one or more passengers or more in general at least one user.

More generally, the motor 3 and the transmission group 4 are part of an axle 11 of the motor vehicle 1.

The motor 3 has an outer casing 13.

The transmission group 4 has an outer casing 14.

The axle 11 comprises an outer case 12, which may in turn comprise the outer casing 13 of the motor 3 and/or the outer casing 14 of the transmission group 4. The casings 13, 14 could be attached together with fastening means (not shown) or be part of a single body, without loss of generality.

The motor 3 is electric, so the axle can also be defined as an electric axle.

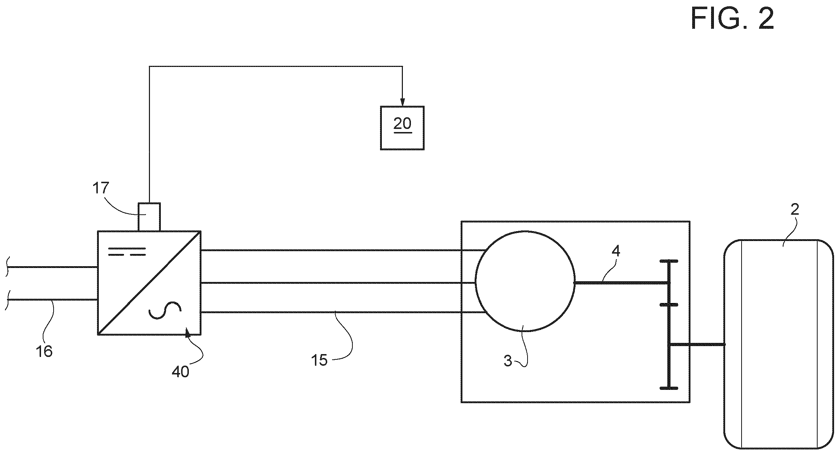

Therefore, as schematized in Figure 2, the motor vehicle 1 or the axle 11 comprises an electrical grid 15 configured to power the motor 3; the grid 15 in turn comprises a DC-AC converter or inverter 40.

Furthermore, in greater detail, the grid 15 comprises one or more direct current conductors 16 for connecting the inverter 40 to a source of electrical energy not shown, for example a battery.

In addition, the grid 15 comprises a connection 17, for example but not necessarily three-phase one (i.e. with three phases), between the inverter 40 and the motor 3 for an alternating current passage defining the supply current of the motor 3.

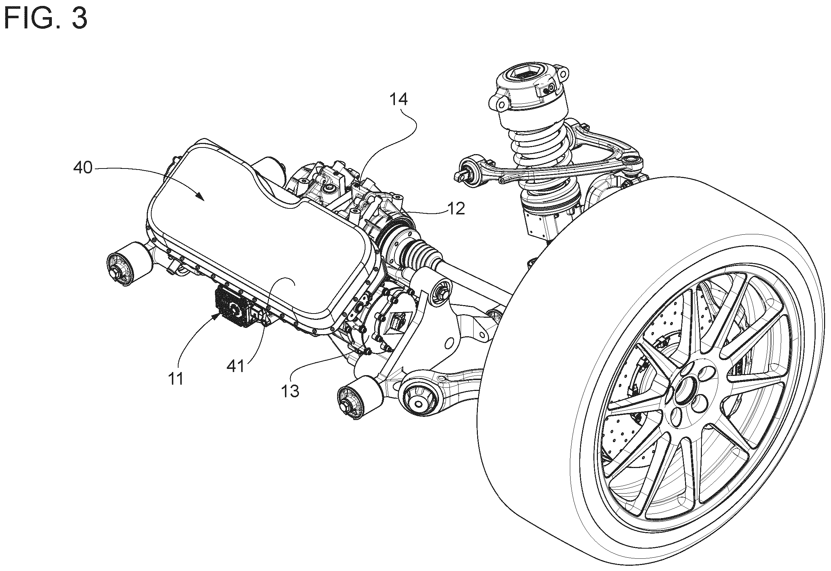

The inverter 40 comprises a box 41, in particular attached to the case 12 and more precisely at the casing 13, so that the box 41 is or may be attached both with respect to the casing 13 and with respect to the casing 14. In the embodiment shown in Figure 3, the box 41 is placed above (in particular immediately above) the case 12 or more precisely the casing 13.

In general, the box 41 is attached to the casing 13, in particular at the casing 13.

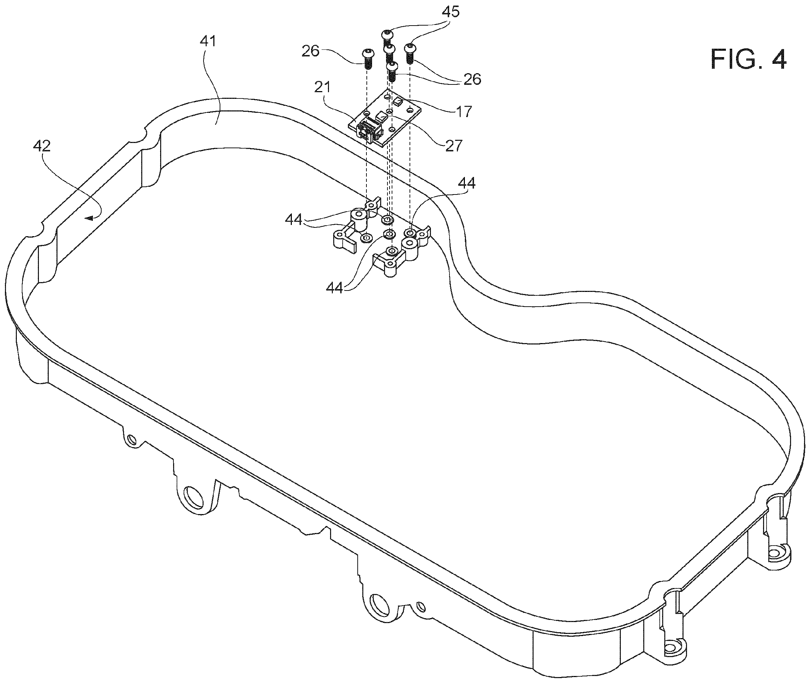

As visible in Figure 4, the box 41 internally defines a housing 42 of the inverter.

The motor vehicle 1 has at least one sensor or transducer 17 for detecting a vibrational response or quantity of the axle 11, for example in an absolute sense or relative to a chassis of the motor vehicle 1, during operation of the latter.

The transducer 17 can more generally be part of a set of sensors or transducers that detect corresponding operating quantities of the axle 11, i.e. quantities indicative of the operation of the axle 11 itself and therefore variable as a function thereof.

The sensors or transducers, including specifically the transducer 17, generate signals corresponding to the detected response or quantity; the signals flow to a processor or control unit 20, which can be part of a dedicated control unit or be integrated into an audio system of the motor vehicle 1, for the purpose of processing a signal characteristic of the operation of the motor 3 or more generally of the axle 11, the characteristic signal having dynamics indicative of the state or mode in which the motor vehicle 1 is driven.

For this purpose, the characteristic signal may be frequency filtered by the control unit 20 via a band-pass filter of the control unit 20.

The control unit 20 could more generally also have other functionalities of a nature other than the possible example of integration into the audio system.

In general, the transducer 17 is coupled to the control unit 20, or the control unit 20 is coupled to the transducer to receive the signal generated by the transducer 17 and is configured to condition the received signal.

The transducer 17 is independent of the other sensors or transducers in the set, which could otherwise be absent. Thus, the transducer 17 is itself configured to generate a corresponding signal, namely in particular the characteristic signal.

The transducer 17 is configured to detect a quantity indicative of a vibration or acceleration, i.e. in particular the vibrational response or quantity of the axle 11.

In particular, advantageously but not necessarily, the characteristic signal is subject to a transposition operation, in which, after possible filtering, the characteristic signal is treated in real time so that the content in frequency corresponding to or belonging to one or more predetermined frequency bands is transposed by means of a "pitch shifting" technique or frequency transposition towards one or more different bands, higher or lower on the frequency scale, with the purpose of enhancing the desired acoustic content, according to the taste of a certain category of users, while maintaining the characteristics of the response of the axle 11 in operation.

This translated signal for frequency bands ("pitch-shifted"), that is, the signal obtained from the transposition operation, is then transferred to the audio system or received by the audio system, from which it can be further adapted by filtering and levels, and emitted through loudspeakers of the audio system for the purpose of feedback to the driver of the motor vehicle 1, on the operating status of the same.

In particular, in this way, the vibro-acoustically unpleasant or even annoying characteristics (for example associated with high-frequency whistles of the transmission 4, of the motor 3 or of the moving components, in particular with frequencies higher than 500 Hz or especially those higher than 1 kHz), or in any case not sought after, of the characteristic signal are transposed over a frequency band typically associated with acceptable or pleasant acoustic sensations.

The acoustic emission can only take place inside the motor vehicle 1 or, in a further embodiment, with a combination of internal and external loudspeakers, the latter having the purpose of warning of the presence or approach of the motor vehicle 1 for pedestrians.

The sensors or transducers, including the transducer 17, may form part of a transduction assembly comprising a plurality of transducers configured to detect respective quantities associated with an operation or a movement or vibration of the motor 3 or more generally of the axle 11 and to generate corresponding signals.

The transducer assembly could optionally also comprise only the transducer 17 or any combination of the transducer 17 with at least one further distinct transducer.

The vehicle 1 may comprise an emission apparatus 18 configured to emit sound and/or vibrations, in particular inside the passenger compartment 6.

The emission apparatus 18 comprises the transduction assembly and therefore in particular the transducer 17.

Further, the emission apparatus 18 may comprise the control unit 20 or more generally the axle 11.

Consequently, the control unit 20 could also not be part of the emission apparatus 18; in other words, the control unit 20 may be independent of the emission apparatus 18.

The emission apparatus 18 emits the sound and/or vibrations as a function of the quantities mentioned above or of the signals generated by the transduction assembly (in particular of the signal generated by the transducer 17).

The apparatus 18 may comprise, for example, one or more sound emitters or loudspeakers 19, for example carried by the body 5, in particular inside the passenger compartment 6.

The loudspeakers 19 are configured to emit or reproduce the sound, in particular in the passenger compartment 6, more in particular directly.

Alternatively or additionally, the emission apparatus 18 may comprise, for example, one or more vibration emitters 19b coupled or attached to a solid body or panel of the motor vehicle 1, in particular inside the passenger compartment 6.

The loudspeakers 19 and/or the vibration emitters 19b are not essential and could therefore be absent. The control unit 20 could even only be configured to process or even only receive the signal from the transducer 17, as well as optionally to perform generic operations and methods as a function of the signal from the transducer 17 received and/or processed.

Each of the vibration emitters 19b (e.g. electrodynamic actuators or shakers) is configured to cause a vibration of the solid body or panel to which it is coupled or attached, e.g. in a coordinated manner with the sound emitted by the loudspeakers 19.

The vibration emitters 19b are coupled to the signal processing unit 20 or the emission apparatus 18.

The panel could for example be part of the body 5. More in particular, the panel could be part of a dashboard, a seat, a pedal, or a steering wheel of the motor vehicle 1.

The transducer 17 is configured to detect a quantity indicative of an acceleration, in particular linear, or of a vibration of the motor 3 or of a component of the axle 11, or of the axle as a whole, for example in an absolute sense or with respect to the body 5. Furthermore, the transducer 17 is configured to generate the signal corresponding to the detected quantity.

In particular, the quantity detected by the transducer 17 is indicative of the vibration of the box 41 of the inverter 40.

The quantity detected by the transducer 17 may coincide with the acceleration itself.

For example, the transducer 17 comprises an accelerometer, in particular based on a MEMS technology (acronym for microelectromechanical system).

The accelerometer is in particular configured to detect the quantity indicative of the vibration or acceleration.

The motor vehicle 1 or more precisely the apparatus 18 comprises an electronic board 21, in particular comprising a support or printed circuit board 22. The transducer 17 can be considered part of the electronic board 21 as it is coupled or attached to the printed circuit board 22.

In particular, the electronic board 21 is attached to the box 41 of the inverter 40, more in particular inside the housing 42.

The printed circuit board 22 has a thickness and extends in length and width respectively along two axes A, B orthogonal to each other and defining a plane. Therefore, the electronic board 21 also extends along the axes A, B.

The printed circuit board 22 has two opposite ends 22a, 22b according to the axis A, as well as two other opposite ends 22c, 22d according to the axis B.

Specifically, the printed circuit board 22 has a rectangular shape, so that the ends 22a, 22b, 22c, 22d comprise the four edges of the printed circuit board 22. Clearly, the rectangular shape is entirely exemplary, but could be different according to other embodiments.

Preferably, in particular if the shape is rectangular, the length of the printed circuit board 22 along the axis B (between the ends 22c, 22d) is greater than the width of the printed circuit board 22 along the axis A (between the ends 22a, 22b).

Conveniently, the thickness of the printed circuit board 22 is greater than or equal to 1.6 mm, more conveniently greater than or equal to 2 mm.

The electronic board 21 comprises a connector 23, in particular for connecting the electronic board 21 to the control unit 20. In fact, the electronic board 21 is connected to the control unit 20, in particular via the connector 23.

For example, but not necessarily, the connector 23 is attached to the printed circuit board 22 and arranged at one of the ends 22a, 22b, 22c, 22d, specifically the end 22c.

The control unit 20 is preferably connected to the connector 23, for example via an audio communication channel of the apparatus 18, i.e. an automotive audio bus, in particular with A2B technology.

The control unit 20 is coupled to the transducer 17 to receive the signal generated by the transducer 17, in particular via the connector 23 and more in particular via the audio communication channel.

For example, the electronic board 21 (as well as the transducer 17, therefore) is powered by electric current passing through the connector 23 and more in particular through the audio communication channel. In other words, the electronic board 21 is powered according to a phantom power supply technique, i.e. by passing the power supply current through the audio communication channel, through which the signal generated by the transducer 17 passes towards the control unit 20.

In particular, therefore, the transducer 17 is coupled to the control unit 20 via the printed circuit board 22, the connector 23, and optionally the audio communication channel, such that the control unit 20 receives the signal generated by the transducer 17.

The electronic board 21 or the printed circuit board 22 has a plurality of attachment points to be attached to a base body, specifically the box 41 of the inverter 40, at the attachment points themselves.

As can also be derived from the figures, the electronic board 21 or the printed circuit board 22 is attached to the base body at the attachment points, in particular directly (for example, that is, without intermediate elements interposed between the electronic board 21 and the base body) and/or rigidly.

As will be clear from the following, also referring to the final portion of this description, the base body is not necessarily coincident with the box 41.

The transducer 17 is configured to detect a quantity indicative of a vibration (or acceleration) of the base body and to generate the corresponding signal.

For example, the base body may be part of (or defined by) the motor 3 or the axle 11. In fact, this derives directly from the fact that the description mentioned how the transducer 17 was configured to detect a quantity indicative of an acceleration, in particular linear, or of a vibration of the motor 3 or of a component of the axle 11.

In more detail, the electronic board 21 has a plurality of respective fastening devices 24 at the attachment points. The fastening devices 24 are configured to allow the fastening of the electronic board 21 to the base body, specifically the box 41.

As mentioned above, the fastening by means of the fastening devices 24 takes place in particular directly and/or rigidly, i.e. directly and/or rigidly.

The attachment points are arranged so as to surround a specific region 25 of the printed circuit board 22 or of the electronic board 21, at which the transducer 17 is attached or arranged.

In other words, the attachment points form a pattern around the transducer 17, for example defining a perimeter of the region 25. More particularly, the pattern is polygonal.

More in detail, the attachment points are connectable to each other by an imaginary closed line 30 (optionally broken), in particular on the plane of the axes A, B, which defines a polygonal perimeter of the region 25. Specifically, optionally, the imaginary line also comprises a portion 31 of an outer edge 32 of the printed circuit board 22 or of the electronic board 21, or more precisely of the end 22d.

In particular, the region 25 is disposed between at least two attachment points according to the axis A and two attachment points according to the axis B or, as in the embodiment shown, between an attachment point and the edge 32 of the printed circuit board 22 or electronic board 21 according to the axis B.

More in particular, but not necessarily, the transducer 17 is aligned with at least one attachment point along a line parallel to the axis B or along the axis B itself; moreover, two attachment points are arranged on the respective flanks of the transducer 17 according to the axis A and are more in particular aligned according to a line parallel to the axis A. In this way, the attachment points are configured according to a triangle, preferably isosceles. For example, one of the edges of the triangle could be a portion of the edge 32 of the printed circuit board 22, specifically a portion of the edge of the end 22d.

More generally, the attachment points are arranged in a polygonal configuration, optionally including a portion of the edge of the printed circuit board 22 as the side of the polygonal configuration. The attachment points represent vertices of the polygonal configuration.

In other words, the attachment points are arranged according to a polygonal pattern around the transducer 17, so as to form the perimeter of the region 25.

The region 25 is preferably arranged at the end 22d, so in other words in a position opposite the connector 23 according to the axis B.

Preferably, two attachment points are located at the end 22c or at the flanks of the connector 23 according to the axis A. The connector 23 is generally spaced from the region 25 according to the axis B or more precisely it is located on the opposite side to the region 25 according to the axis B.

Specifically, these last two attachment points can be aligned along a line parallel to the axis A and independently can have a greater distance between them according to the axis A than that of the two attachment points on the flanks of the transducer 17 according to the axis A.

The fastening devices 24 comprise respective through holes, the centres of which coincide in particular with the attachment points. More generally, the holes are arranged at the attachment points.

The electronic board 21 is attached to the base body, specifically the inverter 40, by means of fastening members 26, for example threaded members (more precisely screws, in particular lag ones), of the apparatus 18 or of the axle 11. The fastening members 26 pass through or are arranged through the holes and are configured to attach the electronic board 21 to the base body.

Consequently, the fastening members 26 attach the electronic board 21 to the base body directly and/or rigidly.

The box 41 or the base body comprises respective seats 44 for receiving the fastening members 26, which are configured to be attached to the seats 44, which may for example comprise or be defined by threaded holes.

Thus, the electronic board 21 can be attached to the box 41 by fastening or screwing the fastening members 26 to the seats 44 with the electronic board 21 between respective ends or heads 45 of the fastening members 26 and the seats 44, i.e. by coupling the seats 44 to the fastening members 26 after the latter have passed through the holes of the fastening device 24.

Here, the fastening members 26 attach the electronic board 21 by engaging the seats 44 with the electronic board 21 between the box 41 or the base body and the ends 45.

By engaging the seats 44, the fastening members 26 cooperate with the seats 44 (in particular by screwing to the seats 44), such that the fastening members 26 and the seats 44 are coupled or attached to each other.

Preferably, the fastening members 26 fasten the electronic board 21 to the box 41 directly, whereby a specific casing for housing the electronic board 21 is avoided.

Preferably, the electronic board 21 comprises a group of electronic components 27 configured to adapt or make the signal generated by the transducer 17 conform with respect to a communication protocol suitable for the audio communication channel. More specifically, the communication protocol is an A2B-type protocol.

In particular, the group of electronic components 27 is attached to the printed circuit board 22 and is more in particular (but not necessarily) arranged between the region 25 and the connector 23 according to the axis B, i.e. between the ends 22c, 22d.

Preferably, but not necessarily, an attachment point is arranged between the group of electronic components 27 and the region 25 or the transducer 17.

For example, the group of electronic components 27 is arranged outside the region 25.

Conveniently, all the electronic components of the electronic board 21, including the transducer 17 and the group 27, are attached on a single face of the printed circuit board 22 according to the direction of the thickness. In particular, the only face is the one opposite the face to be directed towards the seats 44, again according to the direction of the thickness.

When the electronic board 21 is attached to the box 41, the face opposite to that with the electronic components is in contact with the box 41 (more precisely with the walls defining the seats 44), while the face with the electronic components is directed towards the housing 42.

The emission apparatus 18 emits the sound and/or vibrations as a function of the signal generated by the transduction assembly and more specifically by the transducer 17.

Conveniently, the signal generated by the transduction assembly or more precisely by the transducer 17 can be suitably conditioned, before being provided to the loudspeakers 19 and/or to the vibration emitters 19b respectively for the emission of the sound and/or of the vibrations.

After conditioning, the emission apparatus 18 emits sound and/or the vibrations as a function of the conditioned signal. The loudspeakers 19 and the vibration emitters 19b could be combined to more generally form part of an emitter configured to emit sound and/or vibrations as a function of the conditioned signal received.

For example, the control unit 20 may be configured to perform conditioning.

In particular, the conditioning comprises filtering the signal generated by the transduction assembly or by the transducer 17 by means of a frequency-based filter, i.e. a band-pass filter, in particular a low-pass filter. The control unit 20 is configured to filter the signal generated by the transducer assembly or by the transducer 17 via the filter.

Advantageously, but not necessarily, downstream of any filtering, conditioning comprises performing a pitch-shifting technique on the signal generated by the transduction assembly or by the transducer 17 (optionally filtered). The control unit 20 can be configured to perform the pitch-shifting technique on the signal generated by the transduction assembly or by the transducer 17 (optionally filtered).

More precisely, performing the pitch-shifting technique means transposing one or more frequencies of a signal contribution from a first frequency range to a second frequency range distinct from the first frequency range, in particular by applying on each of the frequencies of the first frequency range a corresponding offset, such that each of the frequencies of the first frequency range falls on the second frequency range.

In the following, the first frequency range and the second frequency range will be more simply referred to as the first range and the second range, respectively.

It is not necessary that all the frequencies of the first range be transposed to the second range; ergo, the transposition could concern only some specific frequencies of the frequencies of the first range or all the frequencies of the first range, according to an alternative embodiment.

In practice, the actual execution of the pitch-shifting technique can take place according to any of numerous known methods, including for example the "phase vocoder" method, OLA (Overlap-Add), PSOLA (Pitch-Synchronous Overlap-Add), WSOLA (Waveform-similarity based OLA), "Ocean" (publication "Low Latency Audio Pitch Shifting In The Frequency Domain" by Juilleart & Hirsbunner, published on 1 November 2010 during the "International Conference on Audio, Language and Image Processing"), etc.

The first range and the second range are not necessarily continuous or in the real number field, but could also be discrete or in a different number field.

As already mentioned, the term to transpose can also be understood as applying an offset, where the offset could be a function of the frequency on which it is applied, for example linearly or non-linearly decreasing as the frequency decreases, or constant, i.e. independent of the frequency.

In particular, the applied offset leads to a decrease in frequency. In other words, the transposition takes place downwards. However, this is not strictly necessary, since the transposition could also or only take place upwards according to other embodiments.

Thus, in particular, the second range has a lower extreme less than a lower extreme of the first range.

The first and second ranges may intersect each other, specifically based on the applied offset. Indeed, clearly, in the case of small applied offsets, for example with decreasing offsets, the offset applied on an upper extreme of the first range results in a frequency still contained in the first range and at the same time contained in the second range. Alternatively, the first and second ranges do not intersect, i.e. they are separate or their intersection is empty.

Furthermore, the first and second ranges could have distinct amplitudes, in particular since the offset is a function of the frequency on which it is applied. Preferably, the second range has a smaller amplitude than the first range.

The conditioned signal can therefore be the result of the execution of the pitch-shifting technique, downstream of any filtering of the signal generated by the transduction assembly.

The loudspeakers 19 receive the conditioned signal from the control unit 20, to which they are connected, and are configured to emit the sound in a manner corresponding to the received conditioned signal.

In other words, the conditioned signal is reproducible by the loudspeakers 19. In practice, the loudspeakers 19 reproduce the received conditioned signal, i.e. they emit the sound by reproducing the conditioned signal.

More generally, the signal as a function of which the emission apparatus 18 emits sound could be reproducible by the loudspeakers 19, in particular directly. In practice, the emission apparatus 18 could reproduce the signal, in particular via the loudspeakers 19, thus emitting sound as a function of the signal.

The expression "in a corresponding manner" implies in particular that the sound is a unique function of the conditioned signal, but this does not mean that the loudspeakers 19 (for example being part of the audio system) do not apply further conditioning to the conditioned signal, for example as a function of the conditioned signal itself.

The operation of the loudspeakers 19, which convert a received signal into sound, is well known per se and is therefore not described in detail.

Here, the term convert could be understood as a synonym for reproduce.

Specifically, the loudspeakers 19 emit the sound inside the passenger compartment 6 of the motor vehicle 1, that is, they are arranged inside the passenger compartment 6.

Further, for example independently or in a coordinated manner, the vibration emitters 19b receive the conditioned signal from the control unit 20, to which they are connected, and are configured to cause vibrations in a manner corresponding to the received conditioned signal.

Here too, the expression "in a corresponding manner" implies in particular that the vibrations are a unique function of the conditioned signal, but this does not mean that the vibration emitters 19b do not apply further conditioning to the conditioned signal, for example as a function of the conditioned signal itself.

The loudspeakers 19 and the vibration emitters 19b could more generally be combined to form an emitter configured to emit sound and/or vibration in a manner corresponding to the conditioned signal received.

Alternatively, the loudspeakers 19 may be directed towards the outside of the motor vehicle 1, such that the sound is emitted outside the motor vehicle 1.

From the foregoing, the advantages of the axle 11 are evident.

Thanks to the placement of the attachment points, the region 25 on which the transducer 17 is attached is stiffened, so that the vibrations of the axle 11 are transmitted to the transducer 17 with an approximately unity gain. More in particular, the gain obtained has a maximum limit equal to 1.5, i.e. it is less than or equal to 1.5. Here, the gain is understood as the modulus of the transfer function between the vibration of the axle and the vibration in the region 25.

This enables a rather wide bandwidth of the generated signal, in particular at least greater than or equal to 6 kHz or more preferably up to 8 kHz.

The transducer 17 is integrated with the inverter 40 without the need for a dedicated casing.

The use of an A2B communication protocol and a phantom type power supply is particularly advantageous in terms of the simplicity and effectiveness of the necessary wiring.

Finally, it is clear that modifications and variants can be made to the axle 11 according to the present invention which, however, do not fall outside the scope of protection defined by the claims.

In particular, the number of the components shown and described could be different. Likewise, the shape of the components could be different from what is described and shown.

Furthermore, the emission apparatus 18 could coincide with one of the loudspeakers 19 and/or one of the vibration emitters 19b.

Furthermore, the electronic board 21 can also be used for applications other than sound production. Therefore, the electronic board 21 could be attached to components other than the inverter 40. For example, the electronic board 21 could be attached to a component of the transmission group 4 for predictive maintenance of the transmission group 4. Alternatively, the electronic board 21 could be attached to the body 5 or to the wheels 2 to monitor the vibrations of the suspended and unsprung parts of the motor vehicle 1, or for active road noise control systems.

## Claims

1. Axle (11) for a motor vehicle (1), the axle comprising
- an electric motor (3) having an outer casing (13),
- an electrical grid (15) configured to power the motor (3) and comprising an inverter (40) in turn comprising a box (41) internally defining a housing (42) and attached to the outer casing (13),
- an electronic board (21) comprising a transducer (17) configured to detect a quantity indicative of a vibration of the axle (11) and to generate a corresponding signal, **characterized in that** the electronic board (21) is attached to the box (41).

2. The axle according to claim 1, wherein the electronic board (21) is fixed inside the housing (42).

3. The axle according to claim 1 or 2, wherein the electronic board (21) comprises a plurality of attachment points, at which the electronic board (21) is attached to the box (41), the attachment points being arranged to surround a region (25) of the electronic board (21), the transducer (17) being arranged at said region (25).

4. The axle according to claim 3, wherein the attachment points are connectable to each other by an imaginary closed line (30) defining a polygonal perimeter of said region (25).

5. The axle according to claim 4, wherein the imaginary line (30) comprises at least a portion (31) of a first outer edge (32) of the electronic board (21).

6. The axle according to any one of claims 3 to 5, wherein the electronic board (21) extends along a first axis (A) and a second axis (B) orthogonal to each other, and wherein said region (25) is disposed at least between a first point of the attachment points and a second outer edge (32) of the electronic board (21) according to the second axis (B), and between at least two second points of the attachment points according to the first axis (A).

7. The axle according to claim 6, wherein the second points are aligned with each other along a first line parallel to the first axis (A), and/or wherein the first point is aligned with the transducer (17) along a second line parallel to the second axis (B).

8. The axle according to any one of claims 3 to 7, wherein the electronic board (21) comprises a connector (23) spaced apart from said region (25) according to the second axis (B) and disposed between two third points of the attachment points according to the first axis (A).

9. The axle according to any one of claims 3 to 8, wherein the electronic board (21) comprises a plurality of fastening devices (24) comprising respective through-holes at the attachment points, the axle (11) and the box (41) respectively comprising fastening members (26) and seats (44) for receiving the fastening members (26), wherein the fastening members (26) are arranged through the holes and attach the electronic board (21) by engaging the seats (44) with the electronic board (21) between the box (41) and respective ends (45) of the fastening members (26).

10. Emission apparatus (18) for a motor vehicle (1) comprising
- an axle (11) according to any of the preceding claims,
- a control unit (20) coupled to the transducer (17) to receive the signal generated by the transducer (17) and configured to condition the received signal, and
- at least one emitter (19, 19b) connected to the control unit (20) to receive the conditioned signal and configured to emit sound and/or vibration in a manner corresponding to the received conditioned signal.

11. Motor vehicle (1) comprising an axle (11) according to any one of claims 1 to 9 or an emission apparatus (18) according to claim 10.
